Europäisches Patentamt

European Patent Office

Office européen des brevets

(11) Publication number: **0 084 374**
**A2**

## (12) EUROPEAN PATENT APPLICATION

(21) Application number: 83100370.2

(51) Int. Cl.³: **G 06 F 15/20**

(22) Date of filing: 17.01.83

(30) Priority: 18.01.82 US 340534

(43) Date of publication of application:
27.07.83 Bulletin 83/30

(84) Designated Contracting States:
DE FR GB IT NL

(71) Applicant: UTI Instruments Company
325 North Matilda Avenue
Sunnyvale Cal. 94086(US)

(72) Inventor: Beck, James C.
698 Vincente Avenue
Berkeley Cal. 94707(US)

(72) Inventor: Reinagel, David J.
1512 Allston Way
Berkeley Cal. 94703(US)

(74) Representative: Reinländer & Bernhardt Patentanwälte
Orthstrasse 12
D-8000 München 60(DE)

(54) Digital image processing and display techniques utilizing differential image intensity determinations.

(57) Techniques of image processing and display particularly adapted for use in thermography. A first heat image is digitized and stored. A second heat image is acquired, digitized and then compared point-by-point with that of the first image. Any differences in intensity between the two images are also stored. The difference data is used to display on a CRT an optical image of the thermal differences between the two images, thus allowing comparison of the heat radiant characteristics of one object with a standard, or such characteristics of an object at different times.

FIG._I.

Croydon Printing Company Ltd

0084374

Description

Digital Image Processing and Display
Techniques Utilizing Differential Image
Intensity Determinations

Technical Field

This invention relates generally to the acquisition, processing and display of radiation images utilizing digital processing technology, and more particularly relates to such techniques as applied to thermography, the art of forming heat images of objects.

Background Art

In thermography, it is often desired to note changes in heat radiation of an object, or certain portions of it, over time. Similarly, it is often desired to compare at a particular instant in time the thermal radiation pattern of an object with that of a standard heat image. An example where these techniques are desirable is in the examination and testing of completed electronic circuit boards. Hot spots on the boards can be identified by these techniques. Such hot spots generally indicate the location of malfunctioning components of the circuit board. It is possible to diagnose malfunctions in this way which are very difficult, or impossible, to diagnose in other ways. However, existing thermography techniques and instruments are slow in acquiring and processing the required heat image information, and do not display it in a way that allows this quick determination of temperature differences.

Therefore, it is a principal object of the present invention to provide image data processing and display techniques that allows the user to easily identify such changes.

It is a further object of the present invention to provide a technique of viewing variations in heat patterns of an object in real time.

## Disclosure of Invention

These and additional objects are accomplished by the various aspects of the present invention wherein, briefly, the infra-red intensity of a standard image is digitally stored point-by-point with intensity differences between the standard and subsequently acquired images being calculated point-by-point and displayed. The display of a difference image permits quick diagnosis of portions of the image object which are either changing over time or which differ from a standard image of the same or a different object.

In a preferred architecture for providing the differential image digital data, a single digital word is stored in memory for each point of an object field. A portion of each word records a single image point of the standard object image and another portion of that digital word records any differences of the infra-red intensity of that point of subsequently acquired images. The difference portion of the digital words in memory may be displayed by themselves, the standard image portion of these words may be displayed by themselves or the two portions of the words may be recombined in order to display the most recently acquired image, thereby providing significant flexibility with a minimal digital memory size. Although these techniques have wide application, they are particularly advantageous in thermography.

Additional objects, advantages and features of the various aspects of the present invention, particularly when applied to thermography, can best be understood by referring to the following description of a preferred embodiment thereof, which description should be taken in conjunction with the accompanying drawings.

## Brief Description of the Drawings

Figure 1 is a system block diagram of a thermograph incorporating the various aspects of the present invention, including a more detailed block diagram of an infra-red head subsystem;

Figure 2 is a more detailed block diagram of the video subsystem of Figure 1;

Figure 3 schematically illustrates the form of each digital word in the digital memory in the system of Figures 1 and 2;

Figure 4 is a flow chart which illustrates processing steps carried out by the system of Figures 1 and 2; and

Figure 5 is a flow chart illustrating other processing steps of the system of Figures 1 and 2.

## Best Mode for Carrying Out the Invention

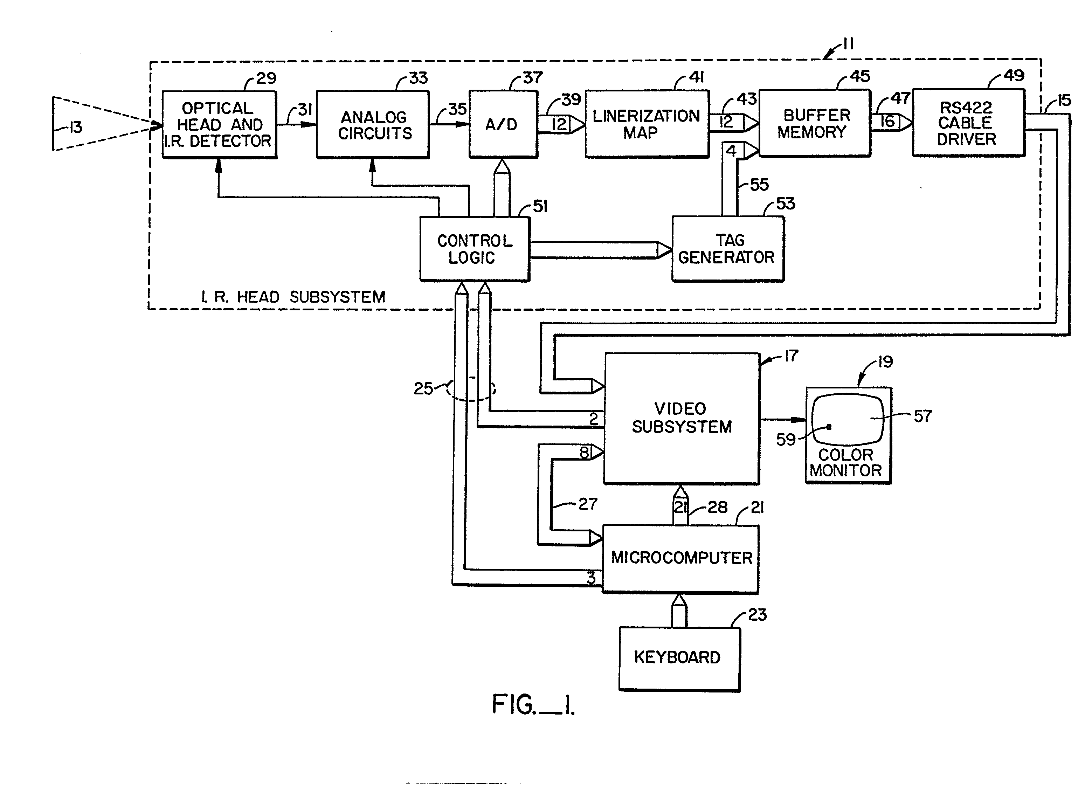

Referring initially to Figure 1, the major components of a system embodying the various aspects of the present invention will generally be described. An infra-red head subsystem 11 optically images an object 13. The embodiment being described is a thermograph wherein the infra-red component of such an image is detected but, of course, other bandwidths of electromagnetic radiation may alternatively be examined for other purposes and still utilize the various aspects of the present invention. An output of the subsystem 11 is in a digital form on a cable 15. Video subsystem 17 receives digital image information from the cable 15 and processes it for display on a color monitor 19. The entire system is under control of a microcomputer 21 having an operator interface keyboard 23. The infra-red subsystem 11 is controlled by digital signals in a control cable 25 from the microcomputer 21 and the video subsystem 17. A data bus 27 and address bus 28 (which includes several read/write control lines) connect the microcomputer 21 to the video subsystem 17 for its control. The system of Figure 1 preferably is constructed so that the infra-red head subsystem 11 can be physically displaced a significant distance from the remainder of the system in order to remotely transmit information over cable 15 to the remainder of the system which can be centrally located.

The infra-red head subsystem 11 of Figure 1 includes an optical and detector portion 29. The function of these elements is to raster scan a two dimensional image of the object 13 and develop, in an output circuit 31, an analog signal representative of the intensity of the image within the infra-red wavelength range. Many types of optical and detector systems can be employed. One such system is described in U.S. Patent No. 3,798,366 Hunt et al. (1974) wherein a six sided mirror assembly is rotated at a high speed for scanning the two dimensional image horizontally across a point infra-red detector. A tilting mirror moves the image vertically across the detector at a speed so that the six sided mirror scans a predetermined number of horizontal lines across the image, a standard being 512 lines.

The time varying signal in the circuit 31 is processed by various analog circuits 33, including amplifiers, compensation circuits and the like, before applying the signal in a circuit 35 to an analog-to-digital converter 37. The converter 37 samples the time varying analog signal in the circuit 35 at a periodic rate and converts the magnitude of the analog samples to discrete digital values in an output circuit 39. This digital output is then applied to a linearization map 41 which is in the form of a programmable read only memory (PROM) with a digital output 43. The linearization map 41 corrects for the non-linear relationship between the emitted infra-red radiation of the object 13 and its temperature. The PROM is addressed by the input data in the circuit 39 and its permanently retained data in the addressed location is placed on the output 43.

The serially occurring digital words in the circuit 43 are then applied to a buffer memory in the form of a first-in, first-out (FIFO) random access memory (RAM) 45. The memory 45 has enough capacity to store at least one scanned line of information and is provided to even out the flow of information. The digital data input to the memory 45 comes in bursts as one image line is scanned, and then there is a pause before data from scanning of the next image line is received. The memory 45 allows the digital data to be accessed through an output circuit 47 at a uniform rate, or some other rate somewhat independent of the rate of data acquired in the circuits 47 are applied by a standard driver circuit to the cable 15 so that there can be a distance between the infra-red head subsystem 11 and the video subsystem 17.

The infra-red subsystem 11 contains control logic circuits 51 whose functions are set by the microcomputer 21 under control of the system operator through commands placed on the keyboard 23. The length of the digital words in the circuit 43, shown to be 12 bits, is increased to 16 bits by the addition of 4 bits from a tag generator 53 and a four conductor output circuit 55 connected to the input of the buffer memory 45. These tags included in the data word identify the type and source of data to which the tags are applied. For example, one tag identifies image data, another the status of the head subsystem, and various other purposes.

Remaining with Figure 1, the color monitor 19 includes a cathode-ray-tube (CRT) 57 for displaying a color optical image of the object 13 wherein different colors of the CRT image represent different temperatures of the object 13. The CRT 57 scans a number of horizontal lines equal to that of the optical head 29, most conveniently 512 lines. The analog-to-digital converter 37 takes, for example, 640 samples across each line, each of these samples representing a point on an image displayed on the face of the CRT 57. A single point 59 of that display has a color that is determined by the value of the digital word for that point that appears in the circuit 39. For the example of 640 display points per line, and 512 lines per picture frame, there are 327,680 points of an image for which a separate digital word is required to specify the color of that image. The number of bits required for each digital word depends upon the temperature range that is desired to be monitored and the resolution of that range that is required. Two range examples are considered with respect to this description, one being a range of 0-200° C in 0.2° C increments, the other being 0-75° C in 0.075° C increments. In either case, there are 1,000 discrete values of temperature within either of those ranges and this requires that each display point digital word contain 10 bits. This practical example is considered throughout the remaining description of the video subsystem 17.

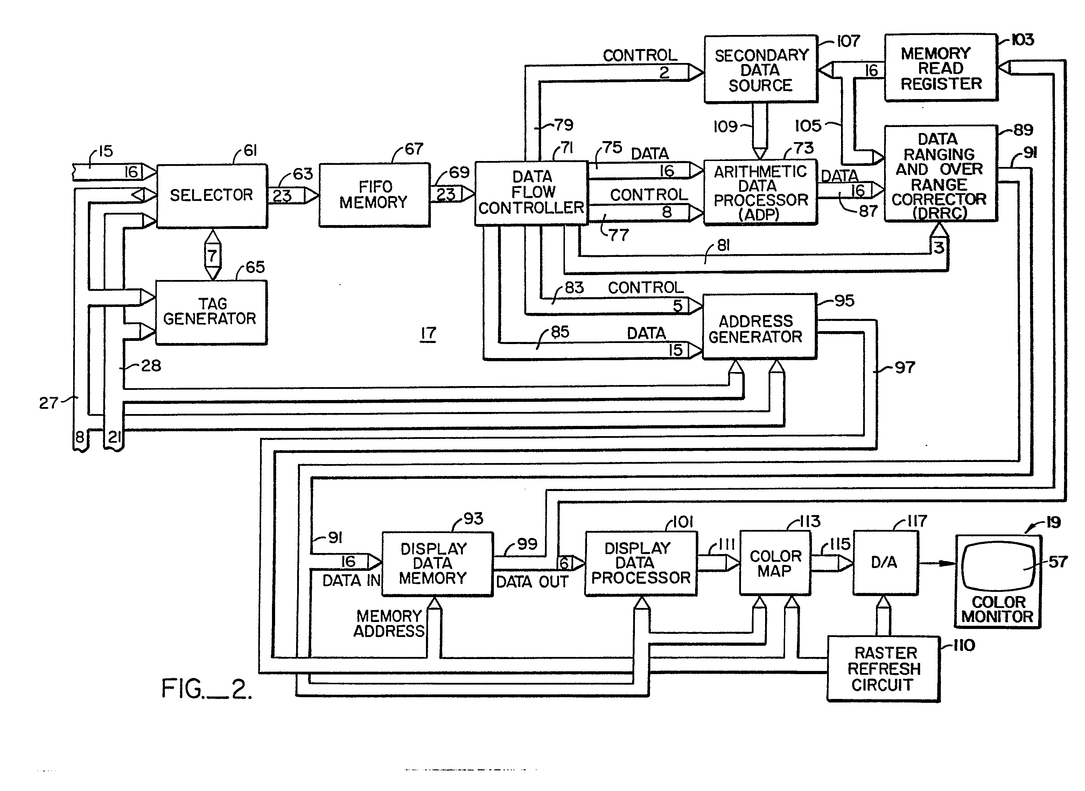

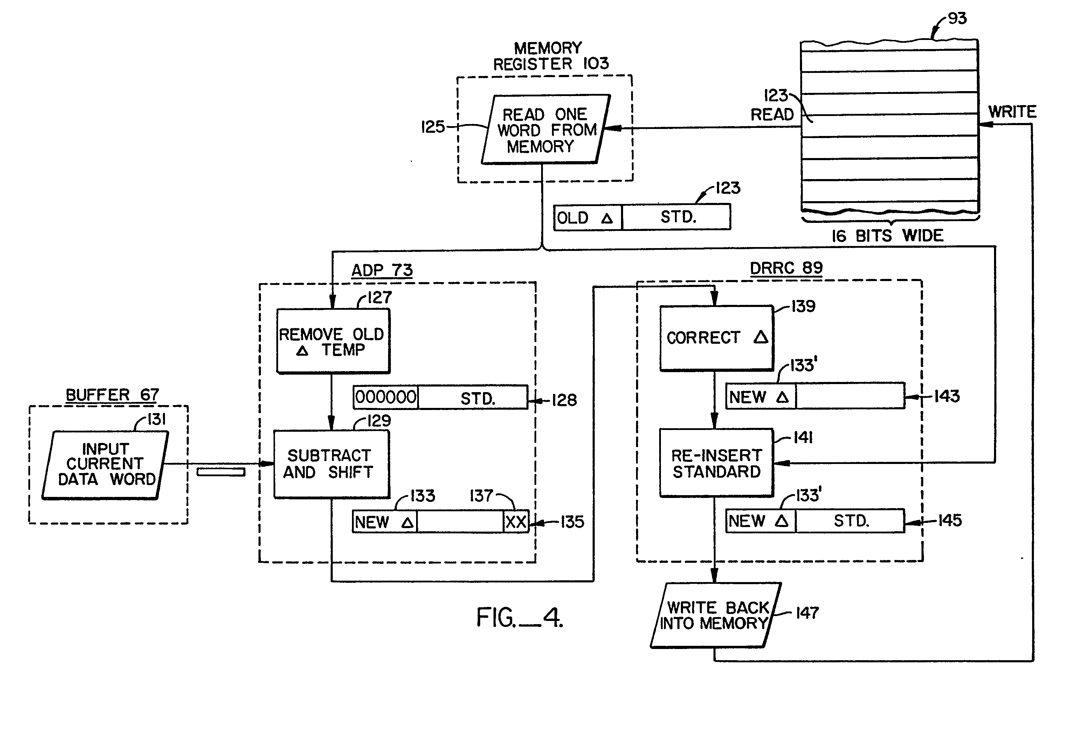

Referring to Figure 2, the structure and operation of the subsystem 17 is explained. The digital words in the cable 15 are first applied to a selector 61 which is a circuit in the nature of a switch that has an output 63. The selector 61 operates in response to the tags carried by the words in cable 15, sending some of the data to the microcomputer 21 and the rest to output 63. The digital words in the output 63 are longer than those of the input in the cable 15, additional bits being added to each word by a second tag generator 65 as previously defined by signals in the buses 27 and 28 from the microcomputer 21. The video subsystem 17 is a tagged architecture device. This architecture is selected because it is faster for the performance of numerous dedicated functions than is possible with the usual program controlled execution. The tags added to the digital words in the cable 15 by the tag generator 65 specify how subsequent circuits within the subsystem 17 are to process that data, as explained below. These tags are determined by the system function selected by the system operator through an appropriate entry in the keyboard 23.

The digital data words in the circuit 63 are applied to a second buffer memory 67 which is similar in function to the memory 45 previously described with respect to Figure 1. It is also a FIFO memory. Its time shifted output in a circuit 69 is applied to a data flow controller 71.

The data flow controller 71 is a logic circuit designed to carry out the instructions that are included in the digital data words applied to it in the circuit 69. For this example, that controller input is a series of digital words, each of which includes 12 bits of temperature information from the circuits 43 (Figure 1) and 7 bits of tag information from the second tag generator 65. It is the 7 bits from the second tag generator 65 that, through the controller logic 71, postures the remaining elements to perform one of several possible manipulations of the object temperature

data. An example of these 7 bit tags for various functions is given in the Appendix in hexadecimal.

An arithmetic data processor (ADP) 73 is central to processing of the digital temperature data. This data is passed through the controller 71 into a data input line 75 to the ADP 73. The type of processing to be done on that data by the ADP 73 is specified in control line 77 whose signal is determined by the controller's 71 interpretation of the tag bits of each of the data words applied to it in the line 69. These tag bits also are interpreted by the controller 71 to form other control signals in lines 79, 81, 83 and 85.

Data processed by the ADP 73 is applied through lines 87 to a data ranging and over-range-corrector (DRRC) 89. The function of this circuit is to examine whether the processed temperature data words being received by it are larger or smaller (i.e., out of range) than that which can be stored in the allocated area of memory. If the data is outside this range, then it is set to be the maximum or minimum number within the range and this corrected data is applied through a data bus 91 to a large display data memory 93. If the temperature data is within range, it is merely passed through the DRRC 89 to the memory 93. The memory 93 is of a random access type (RAM) with a capacity to store at least one complete image frame of temperature data, in the case of the particular example being discussed over 327 K words that are each 16 bits deep. A particular word location of the memory 93 that is addressed at any particular instant is specified by an address generator 95 through an address bus 97. Words in the memory 93 are read out onto a memory output data bus 99 when appropriately addressed.

This bus 99 is connected to a display data processor 101 and to a memory read register 103. The register 103 has the capacity to hold a memory data word of interest for applying it back through lines 105 to the DRRC 89 for recombining with other information, in a manner that is described below. A secondary data source 107 also receives the data words held by the register 103 for application to the ADP 73 through lines 109.

The display data processor 101 receives the 16 bit words from the memory 93 and extracts from them the information necessary for forming a desired display on the color monitor 19 as designated through the microcomputer 21 and information on the data bus 91 that is also applied to the processor 101. The processed data is connected by lines 111 to a color map 113 which is a RAM whose data output in lines 115 is applied to a digital-to-analog converter 117 for driving the color monitor 19. The use of a RAM for the color map 113 and a digital-to-analog converter 117 for specifying the mix of the major color electron guns of the CRT 57 is a standard technique used in color display of information in a digital form.

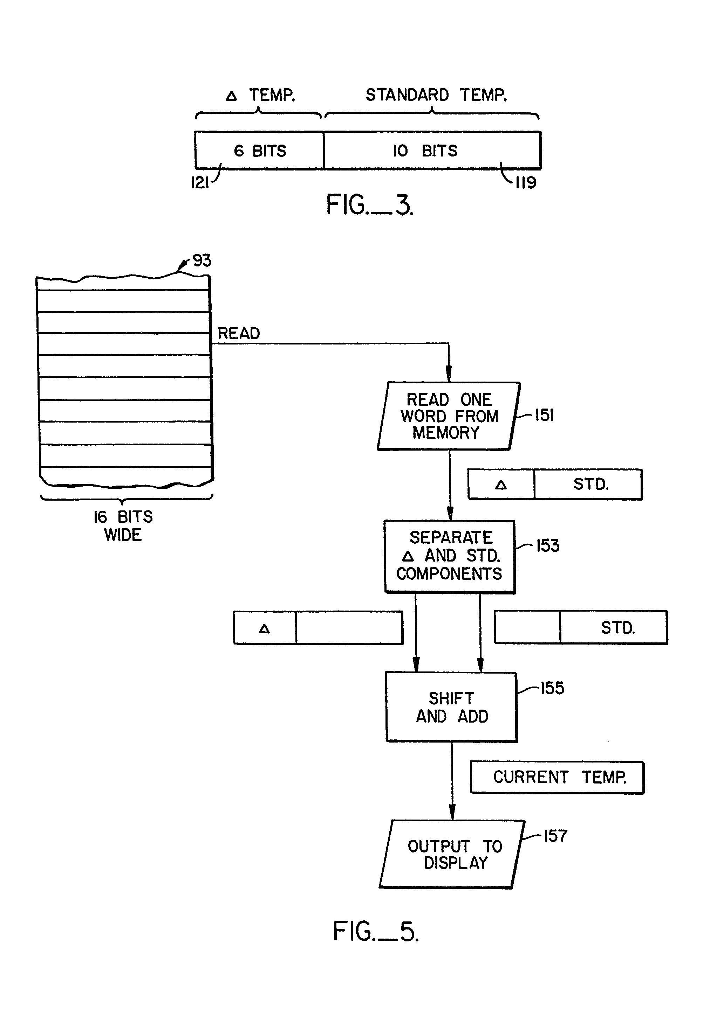

Before explaining the data manipulation operation of the video subsystem 17 shown in Figure 2, a preferred format of each digital word stored in the memory 93 is described with respect to Figure 3. Each word is divided into two segments, the most significant bit group 119 being one segment and a least significant bit group 121 being another segment. The particular number of bits in each group may vary but, for this example, a first group 119 contains 10 bits while the remaining 6 bits of each memory word forms a second group 121. The first group 119 holds information of a reference or standard temperature of a particular image point that this digital word represents. As previously described, 10 bits are required for this, given the example requirements of range and resolution previously set forth. In order to also store the differential temperature of that point at some other time for the same object, or for a different but similar object, a lesser number of bits of precious memory space need be utilized for the differential temperature. Thus, the differential temperature portion 121 is only 6 bits, providing a capability of specifying up to 64 discrete differential temperature values. Resolution is usually not sacrificed for the differential temperature information, however, because of the processing techniques utilized in the video subsystem 17 of Figure 2. The range of the differential temperature that may be stored is limited by only 6 bits being utilized for this purpose but this is satisfactory since the video digital word processing to be described combines this temperature difference information with the standard temperature information of the memory word portion 119 that has a full range. In cases where the differential temperature exceeds the 64 discrete values available for 0.2° C resolution, the user can select a coarser resolution (0.4° C, 0.8° C, etc.). Changes in temperature that are being examined are usually only a portion of the full range, in any event.

Operation of the circuit of Figure 2 to write into the memory 93 the standard temperature portion 119 of each data point digital word is quite straightforward. Appropriate lines of the microcomputer control line 27 add tags to the infra-red detected word that tell the data flow controller 71 and the ADP 73 that these data words are to flow straight through, without any calculation, into the memory 93. Thus, the portion 119 of each of the memory word locations are filled in this manner. If a new standard is to be recorded, it is simply written over the old standard in the same memory word locations.

Object temperature information required for comparison with the standard temperature information is not recorded in this manner but is first processed by the ADP 73 and DRRC 89 of Figure 2 in a manner indicated in the data flow chart of Figure 4. The goal is to record a differential temperature for each image point and record it in the memory word portion 121 (Figure 3) that represent the difference between the current temperature of that point and the previously acquired standard temperature of that point. An entire memory word 123 is read out of the memory 93 and stored in the memory read register 103 as a first processing step 125.

The register 103 holds this word until the processing illustrated in Figure 4 has been completed. The contents of the register 103 are passed to the ADP 73 through the secondary data source 107 (Figure 2). A step 127 removes the old differential temperature from the word 123 by selecting a Boolean mask from the source 107 in a manner shown in the data structure 128. A step 131 inputs the current temperature information to the process. The old standard and new information are subtracted by the step 129 in a manner to form a new differential temperature portion 133 of a new data structure 135. The portion 133 is the 6 most significant bits of the digital word while 1-4 of the least significant bits 137, along with the most significant bit of the portion 133, indicate whether the new differential information for that image point is over-range or not. The calculating steps 127 and 129 are accomplished by the ADP 73 of Figure 2.

The new digital word 135 (Figure 4) is communicated by the lines 87 (Figure 2) to a DRRC 89 where further processing steps 139 and 141 are accomplished. Depending upon the information in the bits 137 of the word 135, the new differential temperature information may be changed to bring it within the range of the system. In any event, a digital word 143 results into which the step 141 reinserts the standard temperature data bits of the initial word 123 that was stored in memory 93, forming a new word 145 that is written back into the same location of the memory 93 by a final step 147. The new word 147 thus replaces the old word 125 in that one memory word locations in order to update a complete frame of stored temperature information.

The information thus stored in the memory 93, as periodically updated, may be displayed on the color monitor 19 in any one of three modes, as desired. One mode is to display the standard temperature portion 119 (Figure 3) of each of the words in the memory 93, without more. As a second option, the differential temperature image can be displayed by using only the portion 121 of each memory word. Such a differential temperature display will have a uniform color as selected through the color map 113 for all image areas wherein there is no difference in temperature. Other areas of the image showing differences in temperature of the object will show in different colors, depending upon the magnitude of that differential. It is this display possibility that makes the instrument being described extremely beneficial for diagnosing problems of objects, such as electronic printed circuit boards, wherein the problem results in local overheating or underheating.

A third option in displaying the information in the memory 93 is to recombine the portions 119 and 121 of each memory data word in a manner to display on the color monitor 119 the most recently acquired infra-red image of the object. The processing accomplished by the display data processor 101 is shown in Figure 5. A first step 151 is to read a word from the memory. A second step 153 is to separate the components 119 and 121 (Figure 3) of that data word and, in a subsequent step 155, to add them together. The recombined data word is then outputed from the processor 101 to the display by a final step 157. This is accomplished for each of the data words in memory containing information of a complete frame of an image to be displayed. The specified one of these three possible display modes is given by a proper signal on the data bus 91 that originates from the microcomputer 21 as a result of a command of the system operator through the keyboard 23.

In any of these three display modes, a raster refresh circuit 110 provides a systematic access of data memory 93 for orderly construction of the displayed image. The circuit 110 addresses the memory 93 only during a line trace of the CRT 57, while the address generator 95 addresses the memory 93 the CRT retrace.

The system described has the capability of updating the differential temperature and displaying any one of the three types of images described in real time. That means that an object 13 may be manually positioned and the effect of such positioning observed a very short time later by a new image on the color minitor 19. This is important for differential temperature display wherein alignment of an object under test with a standard object, whose standard temperature data has already been acquired, is very important in order to locate the undesired hot spots. In order to provide this real time capability, the processing described above must be extremely fast and the architecture of the system permits such speed. The processing described with respect to Figure 4 for updating the differential temperature information in the memory 93 is accomplished while the electron beam of the CRT is retracing to begin to display that new information. A display of the current object information by the processing described with respect to Figure 5 is accomplished in real time. The slowest element of the system is the mechanical electro-optical scanning head 29 that takes a second or more to scan a complete image frame.

A further significant advantage of the system is the minimal memory that is required in order to be able to display the information in three different modes, as described above. By combining standard and differential temperature information into single memory words that are processed as a unit, flexibility, minimal hardware and speed are made possible.

The ADP 73 of Figure 2 is a primary element in permitting the rapid updating of the differential temperature information in the memory 93, as described above. Its construction is preferably four 4 bit bipolar slice processors connected for a 16 bit capability. Eight data shifters are utilized in conjunction with them, connected as a "barrel roller," a standard technique for shifting one binary number any number of desired places with respect to another binary number in one cycle of operation.

The data flow controller 71 contains, in one example, three 4 bit by 1024 bit bipolar PROMs wired in a finite state machine configuration. These PROMs are programmed to recognize the tags (an example of which is given in the Appendix) from the tag generator 65 and provide appropriate control signals in each of the output lines 77, 79, 81 and 83 for each tag.

The address generator 95 contains, in a specific example, two counters: a binary counter determines where the next image data word is to be stored, and an up/down counter determines the memory location that the microcomputer 21 can access. The address generator 95 also includes some FIFO memories that stores read modified write addresses.

The DRRC 89 contains a pair of bi-polar PROMs and a set of data multiplexers to select the data that should go out over the bus 91.

The data display processor 101 includes a three 4-bit bipolar slice processors connected for a 12 bit capacity.

Although the various aspects of the present invention have been described with respect to a preferred embodiment thereof, it will be understood that the invention is entitled to protection within the full scope of the appended claims.

## APPENDIX

01  Feed all 16 bits through to Data Bus

02  Feed 12 low bits through, top bits are zeroed

03  Feed 11 low bits through, Map overflow, top bits are zeroed

04  Feed 10 low bits through, Map overflow, top bits are zeroed

05  Shift data right 1 place, save as 11 bits, top bits are zeroed

06  Shift data right 2 places, save as 10 bits, top bits are zeroed

08  0.2° C delta mode

09  0.4° C delta mode

0A  0.8° C delta mode

0B  1.6° C delta mode

0C  3.2° C delta mode

## Claims

1. A method of acquiring, processing and displaying digital data representative of the intensity of individual points of electromagnetic radiation images of one or more objects, comprising the steps of:
storing such digital data for a first image,
comparing such digital data for a second image on a point-by-point basis with the first image data in a manner to generate digital data of the amplitude of any differences between the first and second images,
storing the difference digital data, and displaying from the difference digital data an image that represents the amplitude differences between said first and second images.

2. A method according to claim 1 wherein the second image data is not stored, but only the difference with the first image data is stored, and wherein the step of displaying the amplitude difference image is accomplished by reference to only the difference data.

0084374

3. A method of acquiring, processing and displaying digital data representative of the intensity of individual points of electromagnetic radiation images of one or more objects, comprising the steps of: storing such digital data for a first image, comparing such digital data for a second image on a point-by-point basis with the first image data in a manner to generate digital data of the amplitude of any differences between the first and second images, storing the difference digital data, recombining the difference digital data with that of the first image in a manner to generate the second image data, and displaying the recombined digital data, thereby to display the second image from digital data that can alternatively be used to display the difference image only.

4. The method according to either of claims 1 or 3 wherein the steps of storing data comprise the formation of a single digital word for each image point, one part of said digital word being the first image digital data and a second portion of said digital word being said difference digital data.

5. The method according to either of claims 1 or 3, comprising the additional step of updating the difference digital data as said second image changes, said updating being accomplished without affecting the stored digital data of the first image.

6. The method according to either of claims 1 or 3 wherein said electromagnetic radiation is substantially within the infra-red portion of the spectrum.

7. A method according to either of claims 1 or 3 wherein said first and second image digital data are acquired of a single object at different instances of time, whereby changes in the object are detected.

8. The method according to either of claims 1 or 3 wherein said first and second image digital data are acquired of different but substantially identical objects, whereby the radiation characteristics of two objects are compared.

9. A thermograph, comprising:
means scanning an infra-red image of an object for generating a plurality of digital words representative of the intensity of the image at defined image points,
a digital memory with one digital word location for each of said defined image points,
means receiving digital words from said scanning means for writing standard image data into a first portion of each memory word location, and
means receiving digital data words from said scanning means for writing data into a second portion of each memory word location that is the difference between the intensity of the given point from a current image and the intensity of that point of the standard image as stored in said first memory word location portion, whereby said data words can be used to create a CRT optical display of a heat image.

10.    A thermograph according to claim 9 that additionally comprises display means receiving digital data words from said memory means for displaying an image whose intensity is determined from the data stored in only the first part of each memory word location, the data stored in only the second part of each memory word location or a sum of the data stored in the first and second portions of each memory word location, thereby making it possible to selectively display, respectively, the standard image, a difference image or the most recently acquired image.

11.    A thermograph, comprising:
means scanning an infra-red image of an object for generating a plurality of digital words representative of the intensity of the image at defined image points,
means receiving said digital data for storing such data of a first infra-red image,
means receiving digital data of a second infra-red image from said scanning means for comparing that data image point by image point with that of said first image and for generating digital data of any intensity differences between the first and second images, and
means receiving said image difference digital data for displaying therefrom an image that represents the amplitude differences between the first and second images, whereby differences in infra-red profiles of the first and second images are displayed.

FIG._1.

FIG._2.

FIG._4.

MEMORY REGISTER 103

READ ONE WORD FROM MEMORY — 125

123 READ

WRITE

93

16 BITS WIDE

| OLD Δ | STD. | — 123

ADP 73

REMOVE OLD Δ TEMP — 127

| 000000 | STD. | — 128

BUFFER 67

INPUT CURRENT DATA WORD — 131

SUBTRACT AND SHIFT — 129

| NEW Δ | XX | — 135

133   137

DRRC 89

CORRECT Δ — 139

| NEW Δ | — 143

133'

RE-INSERT STANDARD — 141

| NEW Δ | STD. | — 145

133'

WRITE BACK INTO MEMORY — 147

0084374

Δ TEMP.    STANDARD TEMP.

| 6 BITS | IO BITS |
|---|---|

121    119

FIG.__3.

93

READ

16 BITS
WIDE

READ ONE
WORD FROM
MEMORY     151

| Δ | STD. |
|---|---|

SEPARATE
Δ AND STD.
COMPONENTS     153

| Δ | |     | | STD. |
|---|---|---|---|---|

SHIFT
AND ADD     155

CURRENT TEMP.

OUTPUT TO
DISPLAY     157

FIG.__5.